# FASCICULE DE BREVET EUROPEEN

(11) **EP 1 314 759 B1**
(45) Date de publication et mention de la délivrance du brevet: **05.07.2006**
(21) Numéro de dépôt: 02292829.5
(22) Date de dépôt: 14.11.2002
(51) Int. Cl.: C08L 77/00, B32B 1/08, B32B 27/34, F16L 11/04, C08L 23/10

(54) **Tube en élastomère vulcanisé comprenant des couches barrière en EVOH et en polyamide**
Rohr aus vulkanisiertem Elastomer mit Barriereschichten aus Polyamid und aus EVOH
Tube made of a vulcanised elastomer comprising polyamide and EVOH barrier layers

(30) Priorité: 23.11.2001 FR 0115184
(43) Date de publication de la demande: 28.05.2003
(73) Titulaire: Arkema, 92800 Puteaux (FR)
(72) Inventeur: Yamamoto, Jun, Chiyoda-ku, Tokyo (JP); Merziger, Joachim, 27000 Evreux (FR); Maldeme, Christophe, 78120 Rambouillet (FR)

(56) Documents cités:
- EP-A- 0 731 308
- EP-A- 1 036 967
- EP-A- 1 122 060
- WO-A-95/16564
- DE-A- 4 243 652

## Description

### [Domaine de l'invention]

La présente invention concerne un tube en élastomère vulcanisé comprenant des couches barrière en EVOH et à base de polyamide.

L'invention est utile pour le fluide du système d'air conditionné. Elle est utile aussi pour des liquides contenant des substances volatiles en évitant un appauvrissement du liquide en cette substance volatile. L'invention est utile aussi pour le liquide de refroidissement des moteurs et pour l'huile. Les tubes de l'invention sont par exemple du type:
caoutchouc (couche extérieure) / EVOH / mélange de polyamide et de polyoléfine à matrice polyamide.

### [l'art antérieur et le problème technique]

On a décrit dans le brevet EP 683725 des tuyaux constitués successivement d'une couche intérieure en PVDF (polyfluorure de vinylidène), d'un liant de coextrusion et d'une couche extérieure en élastomère vulcanisé. Ils ont l'avantage de présenter une bonne résistance aux fluides chimiques agressifs et d'être barrière à de nombreux fluides, en particulier l'essence et les fluides utilisés dans les circuits de climatisation. Cependant ils peuvent être fragiles à basse température. On sait améliorer la résistance au choc du PVDF mais c'est au détriment de sa résistance chimique et de ses propriétés barrière.

L'art antérieur a décrit de nombreux tubes à couche extérieure en polyamide pour l'essence des automobiles. On connait ainsi de la demande de brevet EP 0 731 308 des tubes à base de polyamides et d'EVOH pour le transport d'essence. Ces tubes peuvent avoir une structure à 4 couches comprenant respectivement une couche extérieure de PA 12, une couche de liant qui est une polyoléfine greffée, une couche d'EVOH et une couche intérieure en contact avec l'essence comprenant un mélange de polyamide et de polyoléfine à matrice polyamide.

Le brevet EP 428833 décrit un tube à 3 couches comprenant respectivement une couche extérieure de PA 12, une couche de liant qui est une polyoléfine greffée et une couche intérieure d'EVOH en contact avec l'essence.

Les brevets EP 428834 et EP 477606 décrivent un tube à 5 couches comprenant respectivement une couche extérieure de PA 12, une couche de liant qui est une polyoléfine greffée, une couche de PA 6, une couche d'EVOH et une couche intérieure en PA 6 en contact avec l'essence.

Le brevet US 5038833 décrit un tube à 3 couches comprenant respectivement une couche extérieure de PA 12, une couche d'EVOH et une couche intérieure en PA 12 en contact avec l'essence.

Le brevet EP 1036967 décrit un tube multicouche à base de polyamides, caractérisé par le fait qu'il comporte dans sa direction radiale de l'intérieur vers l'extérieur:
- une couche intérieure formée d'un polyamide ou d'un mélange de polyamide et de polyoléfine à matrice polyamide, cette couche comportant une charge dispersée de noir de carbone électroconducteur produisant une résistivité surfacique inférieure à 10⁶ Ω,
- une couche intermédiaire formée d'un polyamide ou d'un mélange de polyamide et de polyoléfine à matrice polyamide, cette couche ne comportant pas de noir de carbone électroconducteur ou de quantité électriquement significative de ce noir de carbone,
- une couche d'EVOH,
- une couche de liant,
- une couche extérieure de polyamide,
les couches ci-dessus adhérant entre elles dans leur zone de contact respective. Ce tube a de très bonnes propriétés mécaniques et d'étanchéité à l'essence.

Tous ces tubes à couche extérieure en polyamide sont trop coûteux pour les fluides de climatisation. En effet ils ont été conçus pour résister à des conditions mécaniques très sévères en raison du caractère inflammable de l'essence et cette tenue mécanique n'est pas nécessaire pour les fluides de climatisation. De plus ces tubes à base de polyamide sont trop rigides et il est difficile de les installer dans les automobiles. Ils conviennent pour l'essence parce qu'il suffit d'un diamètre extérieur de 8 mm mais pour la climatisation les diamètres peuvent être plus importants.

DE 42 43 652 décrit des membranes de séparation liquide -gaz utiles dans un acumulateur hydraulique. Ces membranes sont constituées d'une partie centrale formée d'une couche d'EVOH entre deux couches de polyamide, puis cette partie centrale est elle même disposée entre deux couches de caoutchouc. Afin de maintenir la flexibilité il n'y a pas de liant entre l'EVOH et chacune des couches de polyamide.

EP 1 122 060 décrit des structures comprenant successivement une couche de HDPE, une couche de liant, une couche d'EVOH, éventuellement une couche de polyamide ou d'un mélange de polyamide et de polyoléfine. La couche d'EVOH ou la couche de polyamide ou du mélange de polyamide et de polyoléfine si elle est présente est en contact avec le fluide trtansporté ou stocké. Cette structure est utile pour faire des réservoirs, des tubes ou des containers.

On a maintenant mis au point un tube en élastomère vulcanisé (caoutchouc) comprenant une couche d'EVOH et une couche de mélange de polyamide et de polyoléfine à matrice polyamide.

### [Brève description de l'invention]

La présente invention concerne un tube multicouche comprenant dans sa direction radiale de l'extérieur vers l'intérieur :
- une première couche d'élastomère vulcanisé formant la couche extérieure,
- une deuxième couche d'EVOH ou d'un mélange à base d'EVOH,
- une troisième couche d'un mélange de polyamide (A) et de polyoléfine (B) à matrice polyamide,
- éventuellement une couche intérieure d'élastomère vulcanisé,
les couches étant successives et adhérant entre-elles dans leur zone de contact respective.

On peut éventuellement disposer une couche de liant entre la première et la deuxième couche, de même entre la couche éventuelle intérieure et la troisième couche.

Le tube de l'invention peut aussi comprendre une couche de renfort du type textile par exemple en polyester ou en fils métalliques disposée entre la première et la deuxième couche. Cette couche de renfort peut être entre la couche de liant et la couche d'EVOH ou entre la couche de liant et la couche extérieure ou bien encore le liant peut se mettre dans les interstices de la couche de renfort.

Les tubes de l'invention peuvent être de diamètre extérieur compris entre 8 mm et 25 cm. L'épaisseur de la couche d'EVOH peut être comprise entre 10 et 200 µm, celle du mélange de polyamide (A) et de polyoléfine (B) à matrice polyamide entre 25 et 500 µm, celle du liant éventuel entre 10 et 100 µm.

On peut fabriquer ces tubes par coextrusion, chaque couche est introduite à l'état fondu à l'aide d'une extrudeuse dans une tête de coextrusion qui produit des flux concentriques formant le tube. Cette technique est connue en elle même. Le tube est ensuite passé dans un four ou un tunnel chauffant pour effectuer la vulcanisation (cross linking) de l'élastomère. Il est recommandé au cours de la coextrusion d'utiliser une tête de coextrusion dans laquelle le flux d'élastomère reste à une température suffisamment basse (en général de l'ordre de 80 à 120°C) pour ne pas provoquer la vulcanisation avant la formation du tube et surtout boucher l'extrudeuse. On peut aussi fabriquer par coextrusion un tube ne comprenant pas la première couche d'élastomère puis ultérieurement faire passer ce tube dans un dispositif dit "de gainage" ou "en tête d'équerre" pour le recouvrir de la couche d'élastomère. Il suffit ensuite comme ci dessus de passer le tube dans un four ou un tunnel chauffant pour effectuer la vulcanisation (cross linking) de l'élastomère. Si le tube comprend une couche intérieure d'élastomère vulcanisé alors on commence par fabriquer un tube constitué de cette seule couche, on le vulcanise puis on le reprend dans un dispositif dit "de gainage" ou "en tête d'équerre" pour le recouvrir toutes les autres couches sauf la couche extérieure d'élastomère puis on procède comme ci-dessus.

### [Description détaillée de l'invention]

**S'agissant de la couche extérieure d'élastomère vulcanisé** les élastomères synthétiques ou naturels vulcanisables convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D.R.C.) à 100° C inférieure à 50 % généralement entre 5 et 40% et de préférence inférieure à 30 %.

Parmi ceux-ci, on peut citer le caoutchouc naturel, le polyisoprène ayant un taux élevé de double liaison en position cis, une émulsion polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isopropène, les produits halogénés des polymères ci-dessus, un copolymère acrylonitrile/butadiène, un élastomère acrylique, un élastomère fluoré, le chloroprène et les caoutchoucs épichlorhydrine.

Si le tube de l'invention ne comprend pas de couche de liant il est recommandé que l'élastomère soit choisi parmi les élastomères fonctionnalisés, les élastomères ayant des motifs acrylates, les élastomères halogénés et les caoutchoucs épichlorhydrine. S'agissant des élastomères fonctionnalisés cette fonction est avantageusement une fonction acide carboxylique ou anhydride d'acide carboxylique. Dans le cas où les élastomères mentionnés plus haut ne comportent pas de radicaux acide carboxylique ou anhydride desdits acides (ce qui est le cas de la plupart de ceux-ci), lesdits radicaux seront apportés par greffage, de façon connue, des élastomères mentionnés ci-dessus où par des mélanges d'élastomères, par exemple avec des élastomères à motifs acryliques tels que l'acide acrylique. De préférence, les élastomères vulcanisables précités comportent un taux en poids de radicaux acide carboxylique ou anhydride de diacide carboxylique compris entre 0,3 et 10 % par rapport auxdits élastomères.

De même on peut mélanger des élastomères n'ayant pas ni fonctions, ni motifs acrylates, qui ne sont pas halogénés et qui ne sont pas des caoutchoucs épichlorhydrine avec au moins un élastomère choisi parmi les élastomères fonctionnalisés, les élastomères ayant des motifs acrylates, les élastomères halogénés et les caoutchoucs épichlorhydrine.

Parmi les élastomères mentionnés ci-dessus, on peut choisir ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange.

Les systèmes de vulcanisation convenant pour la présente invention sont bien connus de l'homme de métier et en conséquence, l'invention n'est pas limitée à un type particulier de systèmes.

Lorsque l'élastomère est à base de monomère insaturé (butadiène, isoprène, vinylidène-norbornène...) on peut citer quatre types de systèmes de vulcanisation :
- Systèmes au soufre constitués de soufre associé aux accélérateurs usuels tels que les sels métalliques de dithiocarbamates (diméthyl dithiocarbamate de zinc, de tellure, etc.), les sulféramides, etc.
   Ces systèmes peuvent contenir également de l'oxyde de zinc associé à de l'acide stéarique.
- Systèmes donneurs de soufre dans lesquels la majorité du soufre utilisé pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou époxy ou toute autre fonction réactive permettant la réticulation), on utilise les réticulants habituels à base de diamines (orthotoluidyl guanidine, diphénylguanidine, etc.) ou de diamines bloquées (carbamate d'hexaméthylène diamine etc.).

Les compositions élastomériques peuvent être modifiées pour certaines propriétés particulières (amélioration des propriétés mécaniques par exemple) par l'addition de charges telles que le noir de carbone, la silice, le kaolin, l'aluminium, l'argile, le talc, la craie, etc. Ces charges peuvent être traitées en surface par des silanes, des polyéthylèneglycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme de métier.

Les combinaisons d'agent de vulcanisation utilisées sont telles qu'elles doivent permettre une réticulation complète de l'élastomère selon une cinétique conduisant à de bonnes propriétés de résistance à la séparation de la couche d'élastomère et de la première couche ou de la couche de liant.

**S'agissant de la deuxième couche, le copolymère EVOH** est aussi appelé copolymère éthylène-acétate de vinyle saponifié. Le copolymère éthylène-acétate de vinyle saponifié à employer selon la présente invention est un copolymère ayant une teneur en éthylène de 20 à 70 % en moles, de préférence de 25 à 70 % en moles, le degré de saponification de son composant acétate de vinyle n'étant pas inférieur à 95 % en moles. Avec une teneur en éthylène inférieure à 20 % en moles, les propriétés barrière dans des conditions de forte humidité ne sont pas aussi élevées qu'on le souhaiterait, tandis qu'une teneur en éthylène dépassant 70 % en moles conduit à des baisses des propriétés barrière. Lorsque le degré de saponification ou d'hydrolyse est inférieur à 95 % en moles, les propriétés barrière sont sacrifiées.

On entend par propriétés barrière l'impermeabilité aux gaz, aux liquides et en particulier à l'oxygene, à l'essence pour les automobiles. L'invention concerne plus particulièrement la carrière à l'essence pour les automobiles.

Parmi ces copolymères saponifiés, ceux qui ont des indices de fluidité à chaud dans l'intervalle de 0,5 à 100 g/10 minutes sont particulièrement utiles. Avantageusement le MFI est choisi entre 5 et 30 (g / 10min à 230°C sous 2,16 kg), "MFI" abréviation de "Melt Flow Index" désigne l'indice de fluidité à l'état fondu.

Il est entendu que ce copolymère saponifié peut contenir de faibles proportions d'autres ingrédients comonomères, y compris des α-oléfines comme le propylène, l'isobutène, l'α-octène, l'α-dodécène, l'α-octadécène, etc..., des acides carboxyliques insaturés ou leurs sels, des esters alkyliques partiels, des esters alkyliques complets, des nitriles, des amides et des anhydrides desdits acides, et des acides sulfoniques insaturés ou leurs sels.

Quant aux mélanges à base d'EVOH ils sont tels que l'EVOH forme la matrice, c'est à dire qu'il représente au moins 40% en poids du mélange et de préférence au moins 50%. Les autres constituants du mélange sont choisis parmi les polyolefines, les polyamides et éventuellement des polymères fonctionnels.

**A titre de premier exemple de ces mélanges à base d'EVOH de la deuxième couche** on peut citer les compositions comprenant (en poids) :
- 55 à 99,5 parties de copolymère EVOH,
- 0,5 à 45 parties de polypropylène et de compatibilisant, leurs proportions étant telles que le rapport de la quantité de polypropylène sur la quantité de compatibilisant est compris entre 1 et 5.

Avantageusement le rapport du MFI de l'EVOH au MFI du polypropylène est plus grand que 5 et de préférence compris entre 5 et 25. Avantageusement le MFI du polypropylène est compris entre 0,5 et 3 (en g/10mm à 230°C sous 2,16 kg). Selon une forme avantageuse le compatibilisant est un polyéthylène portant des greffons polyamide et il résulte de la réaction (i) d'un copolymère de l'éthylène et d'un monomère insaturé X greffé ou copolymérisé avec (ii) un polyamide. Le copolymère de l'éthylène et d'un monomère insaturé X greffé ou est tel que X est copolymérisé et il peut être choisi parmi les copolymères éthylène-anhydride maléique et les--copolymères- éthylène - (méth)acrylate d'alkyle - anhydride maléique, ces copolymères comprennant de 0,2 à 10 % en poids d'anhydride maléique et de 0 à 40 % en poids de (méth)acrylate d'alkyle. Selon une autre forme avantageuse le compatibilisant est un polypropylène portant des greffons polyamide qui résulte de la réaction (i) d'un homopolymere ou d'un copolymère du propylène comprenant un monomère insaturé X, greffé ou copolymérisé, avec (ii) un polyamide. Avantageusement X est greffé. Le monomère X est avantageusement un anhydride d'acide carboxylique insaturé tel que par exemple l'anhydride maleique.

**A titre de deuxième exemple de ces mélanges à base d'EVOH de la deuxième couche** on peut citer les compositions comprenant :
- 50 à 98 % en poids d'un copolymère EVOH
- 1 à 50 % en poids d'un polyéthylène
- 1 à 15 % en poids d'un compatibilisant constitué d'un mélange d'un polyéthylène LLDPE ou métallocène et d'un polymère choisi parmi les élastomères, les polyéthylènes de très basse densité et les polyéthylènes métallocènes, le mélange étant cogreffé par un acide carboxylique insaturé ou un dérivé fonctionnel de cet acide.

Avantageusement le compatibilisant est tel que le rapport MFI₁₀/MFI₂ est compris entre 5 et 20, où MFI₂ est l'indice d'écoulement en masse fondue à 190°C sous une charge de 2,16 kg, mesuré suivant ASTM D1238, MFI₁₀ est l'indice d'écoulement en masse fondue à 190°C sous une charge de 10 kg suivant ASTM D1238.

**A titre de troisième exemple de ces mélanges à base d'EVOH de la deuxième couche** on peut citer les compositions comprenant :
- 50 à 98 % en poids d'un copolymère EVOH
- 1 à 50 % en poids d'un copolymère éthylène - (méth)acrylate d'alkyle,
- 1 à 15 % en poids d'un compatibilisant résultant de la réaction (i) d'un copolymère de l'éthylène et d'un monomère insaturé X greffé ou copolymérisé avec (ii) un copolyamide.
Avantageusement le copolymère de l'éthylène et d'un monomère insaturé X greffé ou copolymérisé est tel que X est copolymèrisé et c'est un copolymère de l'éthylène et de l'anhydride maléique ou un copolymère de l'éthylène, d'un (méth)acrylate d'alkyle et de l'anhydride maléique. Avantageusement ces copolymères comprennent de 0,2 à 10 % en poids d'anhydride maléique et de 0 à 40 % en poids de (méth)acrylate d'alkyle.

**S'agissant du mélange de polyamide (A) et de polyoléfine (B) de la troisième couche on entend par polyamide** les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6 / 12 et le PA 6 / 6-6. L'avantage de ces copolyamides est leur température de fusion inferieure à celle du PA 6.

On peut aussi utiliser tout polyamide amorphe sans point de fusion.

Le MFI des polyamides et des mélanges de polyamide et de polyoléfine de la présente invention est mesuré selon les règles de l'art à une température de 15 à 20°C au-dessus de la température de fusion du polyamide. S'agissant des mélanges à base de PA 6 le MFI est mesuré à 235°C sous 2,16 kg. S'agissant des mélanges à base de PA 6-6 le MFI est mesuré à 275°C sous 1 kg.

On peut utiliser des mélanges de polyamide. Avantageusement le MFI des polyamides est compris entre 1 et 50 g/10 min.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre M̅_{n̅} des séquences polyamides est comprise entre 300 et 15 000 et de préférence entre 600 et 5 000. La masse M̅_{n̅} des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité inherente entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

**Quant à la polyoléfine (B) du mélange de polyamide (A) et de polyoléfine (B) de la troisième couche** elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels
ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :
- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle;
- des copolymères éthylène et acétate de vinyle (EVA) et (méth)acrylate d'alkyle, contenant jusqu'à 40% en poids de comonomères.

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :
- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI de (A), les MFI de (B1) et (B2) peuvent être choisis dans une large plage il est cependant recommandé pour faciliter la dispersion de (B) que le MFI de (A) soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi pour de faibles proportions de (B) n'utiliser qu'un mélange de polyoléfines (B1) pour obtenir une réticulation.

**Selon une première forme préférée de l'invention** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

**Selon une variante de cette première forme de l'invention** la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

**Selon une deuxième forme préférée de l'invention** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine (B) comprend (i) un polyéthylène de type LLDPE, VLDPE ou metallocene et (ii) un copolymère éthylène -(meth)acrylate d'alkyle -anhydride maléique.

**Selon une quatrième forme préférée de l'invention** le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40. Selon une première variante la polyoléfine (B) comprend (i) un polyéthylène de type LLDPE, VLDPE ou metallocène et (ii) un copolymère éthylène -(meth)acrylate d'alkyle -anhydride maléique; selon une deuxième variante la polyoléfine comprend deux polymères fonctionnalisés comprenant au moins 50 % en moles de motifs éthylène et pouvant réagir pour former une phase réticulée.

**S'agissant de la première forme** les proportions sont avantageusement les suivantes (en poids) :
60 à 70 % de polyamide,
5 à 15 % du mélange de (C1) et (C2) cogreffé
le complément en polyéthylène haute densité.
S'agissant du polyéthylène haute densité sa densité est avantageusement comprise entre 0,940 et 0,965 et le MFI entre 0.1 et 5 g/10 min. (190°C 2,16 kg).
Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthylcyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport MFI₁₀ / MFI₂ est supérieur à 18,5, MFI₁₀ désignant l'indice d'écoulement à 190°C sous une charge de 10 kg et MFI₂ l'indice sous une charge de 2,16 kg. Avantageusement le MFI₂₀ du mélange des polymères (C1) et (C2) cogreffés est inférieur à 24. MFI₂₀ désigne l'indice d'écoulement à 190°C sous une charge de 21,6 kg.

**S'agissant de la variante de la première forme** les proportions sont avantageusement les suivantes (en poids) :
60 à 70 % de polyamide,
5 à 10 % de (C2) greffé,
5 à 10 % de (C'2)
le complément en polyéthylène haute densité.
(C2) est avantageusement un EPR ou un EPDM, (C'2) est avantageusement un EPR contenant en poids 70 à 75% d'éthylène.

**S'agissant de la deuxième forme** de l'invention les proportions sont avantageusement les suivantes (en poids) :
60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule 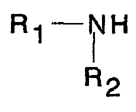 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :
60 à 70 % de polyamide,
5 à 15 % d'un copolymère éthylène -(meth)acrylate d'alkyle -anhydride maléique.
le complément est un polyéthylène de type LLDPE, VLDPE ou metallocene; avantageusement la densité de ce polyethylene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :
**Selon une première** variante:
   60 à 70 % du mélange de polyamide et de copolymère à blocs polyamide et blocs polyether,
   5 à 15 % d'un copolymère éthylène -(meth)acrylate d'alkyle -anhydride maléique.
   le complément est un polyéthylène de type LLDPE, VLDPE ou métallocène; avantageusement sa densité est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.
**Selon une deuxième** variante:
40 à 95 % du mélange de polyamide et de copolymère à blocs polyamide et blocs polyether,
60 à 5 % d'un mélange d'un copolymère éthylène -(meth)acrylate d'alkyle -anhydride maléique et d'un copolymère éthylène -(meth)acrylate d'alkyle -methacrylate de glycidyle.

Le copolymère à l'anhydride a été défini dans la première variante, Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%. Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :
- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.
La préparation des mélanges de la troisième couche peut se faire par mélange des différents constituants à l'état fondu dans les appareillages habituels de l'industrie des polymères thermoplastiques.

**S'agissant de la couche éventuelle intérieure d'élastomère vulcanisé** l'élastomère peut être choisi parmi ceux qu'on a cités pour la couche intérieure. On peut choisir le même que celui de la couche extérieure ou élastomère différent.

**S'agissant des couches de liant** on définit ainsi tout produit qui permet une bonne adhésion entre les couches concernées c'est à dire entre la couche extérieure en élastomère vulcanisé et la couche d'EVOH et entre la couche de mélange de polyamide et de polyoléfine à matrice polyamide et la couche intérieure en élastomère vulcanisé. Le liant est choisi avantageusement parmi les polyoléfines fonctionnalisées et les copolyamides.

**A titre d'exemple de liant à base de polyoléfines fonctionnalisées** on peut citer :
le polyéthylène, le polypropylène, les copolymères de l'éthylène et d'au moins une alpha oléfine, des mélanges de ces polymères, tous ces polymères étant greffés par des anhydrides d'acides carboxyliques insaturés tels que par exemple, l'anhydride maléique, ou des mélanges de ces polymères greffés et de ces polymères non greffés,
les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, (iv) les époxydes insaturés ; ces copolymères pouvant être greffés par des anhydrides d'acides dicarboxyliques insaturés tels que l'anhydride maléique ou des époxydes insaturés tels que le méthacrylate de glycidyle.

**Quant aux liants du type copolyamides** utilisables dans la présente invention ils ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Les copolyamides proviennent, par exemple, de la condensation d'acides alpha-oméga aminocarboxyliques de lactames ou de diacides carboxyliques et diamines.

**Selon un premier type les copolyamides** résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2-Azacyclotridécanone).

**Selon un deuxième type les copolyamides** résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer les suivants :
a) **6/12/IPD.6**
   dans laquelle :
   6 désigne des motifs résultant de la condensation du caprolactame,
   12 désigne des motifs résultant de la condensation du laurolactame (2-Azacyclotridécanone),
   IPD.6 désigne des motifs résultant de la condensation de l'isophorone diamine et de l'acide adipique. Les proportions en poids sont respectivement 20 /65/15.

La température de fusion est de 125°C à 135°C.
b)6/6.6/12
   dans laquelle :
   6 désigne des motifs résultant de la condensation du caprolactame,
   6.6 désigne des motifs hexaméthylèneadipamide (l'hexaméthylènediamine condensée avec l'acide adipique).
   12 désigne des motifs résultant de la condensation du laurolactame (2-Azacyclotridécanone),

Les proportions en poids sont respectivement 40 / 20 / 40.

La température de fusion est de 115°C à 127°C.
c) **pip.12/pip.9/11**
   dans laquelle:
   pip.12 désigne des motifs résultant de la condensation de la pipérazine et du diacide en C 12,
   pip.9 désigne des motifs résultant de la condensation de la pipérazine et du diacide en C9,
   11 désigne les motifs résultants de la condensation de l'acide aminoundecanoïque,
   les proportions en poids sont respectivement 35 / 35 / 30.

Les procédés de fabrication des copolyamides sont connus de l'art antérieur et ces copolyamides peuvent être fabriqués par polycondensation, par exemple en autoclave.

Les différentes couches du tube de l'invention, y compris les couches de liant, peuvent contenir en outre au moins un additif choisi parmi :
- les charges (minérales, anti-feu...),
- les fibres
- les colorants ;
- les pigments ;
- les azurants ;
- les anti-oxydants ;
- les stabilisateurs UV.

## Revendications

1. Tube multicouche comprenant dans sa direction radiale de l'extérieur vers l'intérieur :
• une première couche d'élastomère vulcanisé formant la couche extérieure,
• une deuxième couche d'EVOH ou d'un mélange à base d'EVOH,
• une troisième couche d'un mélange de polyamide (A) et de polyoléfine (B) à matrice polyamide,
• éventuellement une couche intérieure d'élastomère vulcanisé,
les couches étant successives et adhérant entre-elles dans leur zone de contact respective.

2. Tube selon la revendication 1 comprenant aussi une couche de liant entre la première et la deuxième couche.

3. Tube selon la revendication 2 dans lequel le liant est à base de polyoléfines fonctionnalisées.

4. Tube selon la revendication 2 dans lequel la couche de liant est à base de copolyamides.

5. Tube selon l'une quelconque des revendications 1 à 4 comprenant aussi une couche de liant entre la troisième couche et la couche intérieure d'élastomère vulcanisé.

6. Tube selon la revendication 5 dans lequel la couche de liant est à base de polyoléfines fonctionnalisées.

7. Tube selon la revendication 5 dans lequel le liant est à base de copolyamides.

8. Tube selon la revendication 4 ou 7 dans lequel les copolyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone.

9. Tube selon la revendication 4 ou 7 dans lequel les copolyamides résultent de la condensation d'au moins un acide alpha-oméga aminocarboxylique (ou un lactame), au moins une diamine et au moins un diacide carboxylique.

10. Structure selon l'une quelconque des revendications précédentes dans laquelle la polyoléfine (B) de la troisième couche comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

11. Structure selon l'une quelconque des revendications 1 à 9 dans laquelle la polyoléfine (B) de la troisième couche comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

12. Structure selon l'une quelconque des revendications 1 à 9 dans laquelle la polyoléfine (B) de la troisième couche comprend (i) du polypropylène et (ii) une polyoléfine qui résulte de la réaction d'un polyamide (C4) avec un copolymère (C3) comprenant du propylène et un monomère insaturé X, greffé ou copolymérisé.

13. Structure selon l'une quelconque des revendications 1 à 9 dans laquelle la polyoléfine (B) de la troisième couche comprend (i) un polyéthylène de type LLDPE, VLDPE ou metallocene et (ii) un copolymère éthylène - (meth)acrylate d'alkyle -anhydride maléique.

14. Structure selon l'une quelconque des revendication 1 à 9 dans laquelle le polyamide (A) de la troisième couche est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

15. Structure selon la revendication 14 dans laquelle la polyoléfine (B) de la troisième couche comprend (i) un polyéthylène de type LLDPE, VLDPE ou metallocene et (ii) un copolymère éthylène -(meth)acrylate d'alkyle - anhydride maléique.

16. Structure selon la revendication 14 dans laquelle la polyoléfine comprend deux polymères fonctionnalisés comprenant au moins 50 % en moles de motifs éthylène et pouvant réagir pour former une phase réticulée.

## Claims

1. Multilayer tube comprising, in its radial direction from the outside inwards:
• a first layer of vulcanized elastomer forming the outer layer,
• a second layer of EVOH or of an EVOH-based blend,
• a third layer of a blend of a polyamide (A) and a polyolefin (B) having a polyamide matrix,
• optionally, an inner layer of vulcanized elastomer,
the layers being successive and adhering to one another in their respective contact region.

2. Tube according to Claim 1, which also includes a tie layer between the first and second layers.

3. Tube according to Claim 2, in which the tie is based on functionalized polyolefins.

4. Tube according to Claim 2, in which the tie layer is based on copolyamides.

5. Tube according to any one of Claims 1 to 4, also comprising a tie layer between the third layer and the vulcanized elastomer inner layer.

6. Tube according to Claim 5, in which the tie layer is based on functionalized polyolefins.

7. Tube according to Claim 5, in which the tie is based on copolyamides.

8. Tube according to Claim 4 or 7, in which the copolyamides result from the condensation of at least two alpha, omega-aminocarboxylic acids or of at least two lactams having from 6 to 12 carbon atoms or of a lactam and of an aminocarboxylic acid not having the same number of carbon atoms.

9. Tube according to Claim 4 or 7, in which the copolyamides result from the condensation of at least one alpha, omega-aminocarboxylic acid (or a lactam), at least one diamine and at least one dicarboxylic acid.

10. Structure according to any one of the preceding claims, in which the polyolefin (B) of the third layer comprises (i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted with an unsaturated carboxylic acid.

11. Structure according to any one of Claims 1 to 9, in which the polyolefin (B) of the third layer comprises (i) a high-density polyethylene (HDPE), (ii) a polymer (C2) chosen from elastomers, very low-density polyethylenes and ethylene copolymers, (C2) being grafted with an unsaturated carboxylic acid, and (iii) a polymer (C'2) chosen from elastomers, very low-density polyethylenes and ethylene copolymers.

12. Structure according to any one of Claims 1 to 9, in which the polyolefin (B) of the third layer comprises (i) polypropylene and (ii) a polyolefin which results from the reaction of a polyamide (C4) with a copolymer (C3) comprising propylene and an unsaturated monomer X, which is grafted or copolymerized.

13. Structure according to any one of Claims 1 to 9, in which the polyolefin (B) of the third layer comprises (i) a polyethylene of the LLDPE, VLDPE or metallocene type and (ii) an ethylene/alkyl (meth)acrylate/maleic anhydride copolymer.

14. Structure according to any one of Claims 1 to 9, in which the polyamide (A) of the third layer is chosen from blends of (i) a polyamide and (ii) a copolymer having PA-6 blocks and PTMG blocks and blends of (i) a polyamide and (ii) a copolymer having PA-12 blocks and PTMG blocks, the weight ratio of the amount of copolymer to the amount of polyamide being between 10/90 and 60/40.

15. Structure according to Claim 14, in which the polyolefin (B) of the third layer comprises (i) a polyethylene of the LLDPE, VLDPE or metallocene type and (ii) an ethylene/alkyl (meth)acrylate/maleic anhydride copolymer.

16. Structure according to Claim 14, in which the polyolefin comprises two functionalized polymers containing at least 50 mol% of ethylene units and able to react in order to form a crosslinked phase.

## Patentansprüche

1. Mehrschichtiges Rohr, das in radialer Richtung von außen nach innen umfasst:
• eine erste Schicht aus vulkanisiertem Elastomer, das die äußere Schicht bildet,
• eine zweite Schicht aus EVOH oder aus einer Mischung auf der Basis von EVOH,
• eine dritte Schicht aus einer Mischung aus Polyamid (A) und Polyolefin (B) mit Polyamidmatrix,
• gegebenenfalls eine innere Schicht aus vulkanisiertem Elastomer,
wobei die Schichten aufeinander folgen und in ihrer jeweiligen Kontaktzone aneinander haften.

2. Rohr nach Anspruch 1, das auch eine Bindemittelschicht zwischen der ersten und der zweiten Schicht umfasst.

3. Rohr nach Anspruch 2, wobei das Bindemittel auf funktionalisierten Polyolefinen basiert.

4. Rohr nach Anspruch 2, wobei die Bindemittelschicht auf Copolyamiden basiert.

5. Rohr nach einem der Ansprüche 1 bis 4, das auch eine Bindemittelschicht zwischen der dritten Schicht und der inneren Schicht aus vulkanisiertem Elastomer umfasst.

6. Rohr nach Anspruch 5, wobei die Bindemittelschicht auf funktionalisierten Polyolefinen basiert.

7. Rohr nach Anspruch 5, wobei das Bindemittel auf Copolyamiden basiert.

8. Rohr nach Anspruch 4 oder 7, wobei die Copolyamide aus der Kondensation von mindestens zwei alpha,omega-Aminocarbonsäuren oder von mindestens zwei Lactamen resultieren, die 6 bis 12 Kohlenstoffatome aufweisen oder von einem Lactam und einer Aminocarbonsäure, die nicht die gleiche Anzahl an Kohlenstoffatomen aufweisen.

9. Rohr nach Anspruch 4 oder 7, wobei die Copolyamide aus der Kondensation mindestens einer alpha,omega-Aminocarbonsäure (oder einem Lactam), mindestens einem Diamin und mindestens einer Dicarbonsäure resultieren.

10. Struktur nach einem der vorhergehenden Ansprüche, wobei das Polyolefin (B) der dritten Schicht (i) ein Polyethylen hoher Dichte (HDPE) und (ii) eine Mischung eines Polyethylens (C1) und eines Polymers (C2) umfasst, ausgewählt aus Elastomeren, Polyethylenen sehr niedriger Dichte und Ethylencopolymeren, wobei die Mischung (C1) + (C2) durch eine ungesättigte Carbonsäure cogepropft ist.

11. Struktur nach einem der Ansprüche 1 bis 9, wobei das Polyolefin (B) der dritten Schicht (i) ein Polyethylen hoher Dichte (HDPE), (ii) ein Polymer (C2), ausgewählt aus Elastomeren, Polyethylenen sehr niedriger Dichte und Ethylencopolymeren (C2), die durch eine ungesättigte Carbonsäure gepfropft sind, und (iii) ein Polymer (C'2), ausgewählt aus Elastomeren, Polyethylenen sehr niedriger Dichte und Ethylencopolymeren, umfasst.

12. Struktur nach einem der Ansprüche 1 bis 9, wobei das Polyolefin (B) der dritten Schicht (i) Polypropylen und (ii) ein Polyolefin umfasst, das aus der Reaktion eines Polyamids (C4) mit einem Copolymer (C3) resultiert, das Propylen und ein ungesättigtes Monomer X enthält, das gepfropft oder copolymerisiert ist.

13. Struktur nach einem der Ansprüche 1 bis 9, wobei das Polyolefin (B) der dritten Schicht (i) ein Polyethylen vom Typ LLDPE, VLDPE oder Metallocen und (ii) ein Ethylen-Alkyl(meth)acrylat-Maleinsäureanhydrid-Copolymer umfasst.

14. Struktur nach einem der Ansprüche 1 bis 9, wobei das Polyamid (A) der dritten Schicht ausgewählt ist aus den Mischungen aus (i) Polyamid und (ii) Blockcopolymer PA 6 und Blockcopolymer PTMG und den Mischungen aus (i) Polyamid und (ii) Blockcopolymer PA 12 und Blockcopolymer PTMG, wobei das gewichtsmäßige Mengenverhältnis von Copolymer und Polyamid zwischen 10/90 und 60/40 liegt.

15. Struktur nach Anspruch 14, wobei das Polyolefin (B) der dritten Schicht (i) ein Polyethylen vom Typ LLDPE, VLDPE oder Metallocen und (ii) ein Ethylen-Alkyl(meth)acrylat-Maleinsäureanhydrid-Copolymer umfasst.

16. Struktur nach Anspruch 14, wobei das Polyolefin zwei funktionalisierte Polymere umfasst, die mindestens 50 Mol-% Ethylenmotive umfassen und reagieren können, um eine vernetzte Phase zu bilden.
